# FASCICULE DE BREVET EUROPEEN

(11) **EP 1 571 135 B1**
(45) Date de publication et mention de la délivrance du brevet: **05.04.2017**
(21) Numéro de dépôt: 05290429.9
(22) Date de dépôt: 24.02.2005
(51) Int. Cl.: C04B 20/06, C04B 33/132, C04B 33/30, C04B 35/626, C04B 38/00

(54) **PROCÉDÉ DE FABRICATION D'ÉLÉMENTS DE CONSTRUCTION INCORPORANT DES BOUES D'ÉPURATION**
VERFAHREN ZUR HERSTELLUNG VON BAUELEMENTEN DIE KLÄRSCHLAMME ENTHALTEN
METHOD FOR MAKING CONSTRUCTION ELEMENTS INCORPORATING SEWAGE SLUDGE

(30) Priorité: 04.03.2004 FR 0402288
(43) Date de publication de la demande: 07.09.2005
(73) Titulaire: Valorisation Céramique du Pays de Bray, 76220 Ferrières-en-Bray (FR)
(72) Inventeur: Straumann, Henry, 60390 Auneuil (FR); Sévèque, Jean-Louis, 60390 Berneuil-en-Bray (FR); Faure, François-Xavier, 60390 Auneuil (FR)
(74) Mandataire: Lavoix

(56) Documents cités:
- EP-A- 0 430 232
- WO-A-00/29345
- WO-A1-2004/068906
- GB-A- 1 478 904
- NL-A- 7 711 341
- US-A- 4 872 993
- US-A- 4 874 153
- US-A- 4 882 067
- US-B1- 6 342 088
- DATABASE WPI Section Ch, Week 200405 Derwent Publications Ltd., London, GB; Class L02, AN 2004-049377 XP002304061 & KR 2003 071 419 A (LEE M S) 3 septembre 2003 (2003-09-03)
- GIUGLIANO M ET AL: "RECYCLING OF TANNERY SLUDGES IN THE MANUFACTURE OF BRICKS" 1 décembre 1987 (1987-12-01), CHEMICAL ABSTRACTS + INDEXES, AMERICAN CHEMICAL SOCIETY. COLUMBUS, US, PAGE(S) 291 , XP000017026 ISSN: 0009-2258 * abrégé *
- 1 décembre 1987 (1987-12-01), CHEMICAL ABSTRACTS + INDEXES, AMERICAN CHEMICAL SOCIETY. COLUMBUS, US , XP000374546 ISSN: 0009-2258 * abrégé *

## Description

La présente invention concerne un nouveau procédé de fabrication de granulats d'argile expansée.

L'argile expansée est utilisée dans de nombreux domaines en raison de son caractère inerte, sa stabilité, sa faible densité et ses propriétés isolantes. Ainsi, on l'utilise dans l'isolation thermique, la filtration, la production de matériaux de construction ou de décoration, ou pour la réalisation d'ouvrages dans les activités du bâtiment.

Par ailleurs, on connaît les problèmes posés par l'élimination des déchets comportant des matières organiques tels que les boues de station d'épuration ou les boues industrielles.

Le document US 4,874,153 décrit un procédé de préparation de produits céramiques utilisant des boues d'épuration et de l'argile.

WO 2004/068906 A1 concerne un procédé de fabrication de granules comportant notamment les étapes de mise en forme par granulation d'un matériau pâteux, et chauffage des granulats formés par rayonnement micro-ondes jusqu'à une température comprise entre 400 et 2000°C.

KR 2003 071 419 A concerne un procédé de préparation de granulats d'argile très légers dans lequel on mélange de l'argile avec des boues organiques en faible quantité, de l'argile expansée, de l'oxyde de fer et du verre usagé en poudre. Le mélange est extrudé, granulé, imprégné dans de l'huile usagée, chauffé directement à 900 à 1050°C, puis cuit à environ 1100°C.

NL 7 711 341 A concerne un procédé destiné à la fabrication de briques consistant en une étape de mise en forme, séchage et cuisson d'un mélange d'argile et de matériau organique.

On connaît des procédés de valorisation de ces boues d'épuration dans le domaine des céramiques. Toutefois, cette filière ne permet pas d'absorber des quantités importantes de boues en raison de la faible teneur en boues (2 à 3 % en poids).

Le but de l'invention est alors de proposer un procédé de valorisation des déchets permettant la production de matériaux valorisables et incorporant des quantités importantes de boues organominérales.

La solution selon l'invention consiste en un procédé de préparation de granulats d'argile incorporant une teneur élevée en boues organominérales.

Ce procédé permet de produire des granulats expansés légers et résistants, présentant une porosité élevée à travers tout leur volume. De plus, il permet de valoriser des boues, en particulier celles riches en matières organiques, par exemple provenant de stations de boues d'épuration ou d'activités industrielles.

L'invention propose un procédé de préparation de granulats d'argile expansée selon la revendication 1.

La fabrication de granulat d'argile expansée nécessite à titre de matière première de l'argile. Cette argile peut provenir de carrières d'argiles ou être une argile de recyclage. Il peut s'agir aussi d'argile issue du lavage de granulats d'extraction ou de travaux publics. L'ensemble des argiles des classification I à IV du diagramme de Winkler convient à l'application, notamment les argiles de type illite ou smectite. De préférence, l'argile est une argile de carrière.

Avant le mélange, l'argile est de préférence soumise à une ou plusieurs étapes de préparation suivantes :
- entreposage et pourrissage permettant d'obtenir une homogénéisation de l'argile, en particulier au niveau de sa teneur en eau ;
- fragmentation ; et/ou
- broyage et/ou laminage.

Les étapes de préparation de l'argile peuvent être simplifiées ou complétées selon la nature de l'argile et les conditions de son obtention. Ainsi, il peut être utile de sécher partiellement l'argile avant son entreposage puis de la mélanger aux autres constituants pour favoriser l'inclusion d'un maximum de boue avec une plasticité juste suffisante. En règle générale, le mode de préparation de l'argile sera similaire aux usages classiques pour la production de matériaux de construction céramiques.

L'argile est amenée à l'état plastique par incorporation d'une quantité d'eau appropriée, le cas échéant avant laminage. D'autres additifs classiquement utilisés dans l'industrie céramique peuvent être ajoutés à ce stade tels que des oxydes de titane ou de fer, des carbonates de baryum ou de manganèse ou le talc.

Les boues organominérales à incorporer dans les granulats d'argile sont de préférence des boues d'épuration ou de boues industrielles. De préférence, les boues comprennent au moins 40 %, de préférence 60 à 80 % en poids en matière sèche de matières organiques. On entend par matières organiques les composés carbonés ou azotés donnant lieu a un dégagement gazeux à température élevée, permettant ainsi d'obtenir une porosité particulière. Il s'agit plus particulièrement de stations de boues d'épuration communales, industrielles ou mixtes, de boues de dragage, de boues industrielles provenant notamment de l'industrie agroalimentaire ou papetière, ou d'un de leurs mélanges.

Les boues sont de préférence soumises à l'une ou plusieurs des étapes de préparation suivantes :
- séchage jusqu'à une teneur en eau de 20 à 50 % en poids, de préférence à une teneur en eau de 35 % en poids ; et/ou
- broyage à une granulométrie inférieure à 2mm.

Il peut s'avérer avantageux d'ajouter certains additifs sous forme liquide ou sous forme de poudre finement broyée, comme l'oxyde de manganèse, pour favoriser leur dispersion dans la matrice argileuse, ou obtenir des effets esthétiques particuliers.

Il peut être avantageux d'ajouter au mélange argile/boues/eau des additifs spécifiques. Dans ce cadre, on ajoute de préférence des additifs permettant d'éviter la libération d'éléments indésirables pendant le procédé de fabrication et/ou à partir du produit final. Ainsi, on peut ajouter des sels de baryum, des sels de strontium ou d'aluminosilicate, par exemple des laitances de ciment, afin de bloquer la libération de sulfate. Aussi, il peut être avantageux d'ajouter des carbonates ou des hydroxydes d'aluminium afin de précipiter et/ou de bloquer la libération de métaux solubles.

Ces additifs peuvent être des produits purs ou issus de valorisation de déchets. Leur nature et leur taux d'incorporation varieront selon la composition des matières premières du mélange.

De préférence, les additifs sont ajoutés au début du mélange afin de permettre une répartition optimale.

Le mélange à granuler comprend 10 à 50 % en poids en matière sèche de matières organiques.

La quantité d'eau ajoutée au mélange dépend tout d'abord de la teneur en eau des autres constituants, à savoir l'argile et les matières organiques. Avantageusement, la quantité d'eau présente est faible. En effet, il faut l'éliminer par la suite dans l'étape de séchage, ce qui consomme de l'énergie. Toutefois, de l'eau est nécessaire pour amener le mélange à un taux de plasticité permettant la mise en forme. En outre, l'addition de davantage d'eau permet d'abaisser la viscosité et ainsi de faciliter la mise en oeuvre du mélange et de granulation. A partir de ces éléments, l'homme du métier est en mesure de déterminer la quantité d'eau à ajouter dans le mélange.

Il peut être avantageux d'ajouter l'eau de manière fractionnée. Ainsi, il est par exemple possible d'homogénéiser l'argile et la boue séparément par addition d'eau à chacune de ces étapes.

En principe, l'ordre d'introduction des différentes matières premières dans le mélange n'est pas crucial. Toutefois, il s'est avéré préférable d'ajouter le complément ultime d'eau, conjointement avec les additifs spécifiques à la boue, dans un pré mélange de l'argile et de la boue, puis de granuler le mélange par l'une des méthodes connues par l'homme du métier tel que le filage et découpe, ou le formage par pressage.

De préférence la granulation du mélange est réalisée par filage. Le filage consiste à presser le mélange à travers une forme à l'aide d'une vis ou d'un piston. Le mélange filé est ensuite découpé à l'aide d'un fil rotatif, par exemple. Le produit ainsi obtenu peut être sous forme de cylindre ou de parallélépipède.

Ce granulat peut ensuite, le cas échéant, être transformé en granulat sphérique. Cette étape peut être réalisé par exemple par sphéronisation. Le granulat est introduit dans un récipient, lequel est ensuite soumis à rotation, le granulat s'arrondissant progressivement par chocs successifs.

Le granulat ainsi préparé, a généralement un diamètre moyen compris entre 0,1 et 20 mm, de préférence entre 2 et 9 mm.

Le granulat est ensuite soumis à une étape de séchage qui permet d'extraire l'eau ajoutée afin de conférer une plasticité suffisante au mélange pour le formage des produits et qui améliorera l'étape finale de cuisson. Le granulat est de préférence séché jusqu'à une teneur résiduelle d'eau inférieure à 5 et de préférence inférieure à 2 % en poids.

Le séchage est de préférence réalisé à une température comprise entre 25 et 120°C maximum de 150°C, afin de ne pas provoquer lors de cette opération le départ de l'eau constitutive de la matière argileuse. Cette étape de séchage est en soi connue. Elle peut être réalisée dans un dispositif tel qu'un séchoir électrique, un séchoir micro-ondes ou encore un séchoir fonctionnant au gaz.

Après granulation et séchage, le granulat est soumis à une cuisson à une température appropriée pour assurer l'expansion de l'argile.

La cuisson est réalisée en deux étapes successives. La première étape consiste à soumettre le granulat à une température de 500 à 750°C. De préférence, la température est atteinte par une montée progressive, par exemple sur une durée de 3 à 6 heures. Cette étape permet d'une part, d'éliminer les matières organiques et d'autre part, d'obtenir l'expansion en volume du granulat.

La deuxième étape de la cuisson est réalisée à une température de 900 à 1200°C. La température exacte dépend du granulat, notamment de la nature de l'argile ainsi que des caractéristiques de produit souhaitées.

Cette étape permet, d'une part, l'expansion finale du volume du granulat, et d'autre part, l'acquisition d'une cohésion définitive du granulat par un effet d'eutectique entre les fractions minérales respectives de l'argile et de la boue.

Les deux étapes de la cuisson peuvent être réalisées dans un seul et même four. Toutefois, il est généralement préférable de réaliser la cuisson dans deux fours successifs, de type tournant, afin d'être en mesure de varier durant la cuisson les gradients de montée en température.

Après la cuisson, on obtient un granulat d'argile expansé ayant une masse volumique apparente comprise entre 500 et 1200 kg/m³.

Le granulat expansé obtenu présente une granolumétrie typiquement comprise entre 0,1 et 20 mm. Celle-ci peut être modifiée, au besoin, par exemple par un tamisage.

Après la cuisson et, selon le mode de réalisation préféré après chacune des deux étapes de cuisson, il est possible de modifier la surface du granulat en le soumettant à des projections d'additifs durant les phases de chute ou de pré-chute en partie finale du four ou pendant la phase de refroidissement.

Il peut s'agir notamment d'étapes permettant un émaillage, un grésage de surface ou encore une glaçure avec création d'un effet fondant.

Ces étapes sont en soi connues par l'homme du métier.

La cuisson est réalisée de manière conventionnelle dans un four approprié, par exemple un four électrique micro-ondes ou un four fonctionnant au gaz naturel.

Suite à l'opération de cuisson, le granulat est refroidi à température ambiante.

Avantageusement, le refroidissement est progressif. Ainsi, il est favorable de diminuer la température à une vitesse de 100°C par heure à 300°C par heure pour éviter la fragilisation du granulat par la transformation du quartz et la variation dimensionnelle que s'ensuit.

Le granulat d'argile expansée obtenu selon le procédé de l'invention peut ensuite le cas échéant être soumis à d'autres opérations de surfaçage. Ainsi, il peut être intéressant d'enrober le granulat afin d'affiner la porosité de surface. A titre d'exemple, l'enrobage peut être réalisé par des matériaux de type polymères, ou à base d'hydrocarbures. Il peut être également intéressant de modifier sa couleur et/ou son aspect esthétique.

Il est décrit le granulat d'argile expansée susceptible d'être obtenu selon le procédé décrit ci-dessus.

On a en effet constaté que le granulat d'argile expansée ainsi préparé présente des caractéristiques différentes de celles des granulats obtenus de manière classique ou incorporant des quantités inférieures de matières organiques. En particulier, on s'aperçoit que la porosité est de type différent, c'est-à-dire et non pas répartie de manière homogène à travers le granulat concentré à la surface.

Les mesures de porosité sont réalisées selon les normes NF EN 13-055-1 (granulats légers pour bétons et mortiers) et NF 13-055-2 (granulats légers pour chaussées). Ces mesures font apparaître notamment une porosité fermée comprise entre 55 et 75 % en volume.

Le granulat d'argile expansée préparé est particulièrement intéressant pour la fabrication de matériaux de construction, en particulier de blocs de parpaings. On peut également par ce même procédé et l'usage de fours continus de type tunnel, où les produits sont statiques durant la cuisson, produire des blocs de construction.

Ainsi, il est décrit des éléments de construction, notamment des briques, comprenant du granulat d'argile ainsi préparé.

On connaît des briques allégées obtenues par incorporation de déchets de papeterie. Toutefois, ces produits se distinguent de briques obtenues à partir de d'un mélange d'argile et de boue notamment par une porosité de faible taille. Le procédé selon l'invention conduit en outre à une répartition porométrique plus large, favorable à l'amélioration de la résistance au gel des produits, à des caractéristiques d'absorption acoustiques améliorées et à des effets esthétiques inédits.

Le granulat d'argile expansé ainsi fabriqué est léger et résistant, et présente une porosité élevée à travers tout son volume. Ces propriétés d'isolation thermique et phonique le rendent donc intéressant pour des applications dans le domaine du bâtiment.

En particulier, le granulat d'argile expansée fabriqué peut être utilisé comme granulat léger pour béton et mortier pour chaussée, ou encore comme granulat pour l'hydroculture et l'épuration des eaux.

## Revendications

1. Procédé de préparation de granulats d'argile expansée comprenant les étapes de :
a) granulation d'un mélange d'argile comprenant au moins 10 % en poids en matière sèche de boue organominérale, ledit mélange comprenant de 10% à 50% en poids en matière sèche de matières organiques ;
b) séchage du granulat obtenu ; et
c) cuisson du granulat pour obtenir un granulat d'argile expansée, ladite cuisson étant réalisée en deux étapes successives,
- la première étape de cuisson réalisée à une température de 500°C à 750°Céliminant les matières organiques et obtenant l'expansion en volume du granulat,
- la deuxième étape de cuisson réalisée à une température de 900°C à 1200°C obtenant l'expansion finale du granulat et l'acquisition d'une cohésion définitive du granulat par un effet d'eutectique entre les fractions minérales respectives de l'argile et de la boue ;
les boues étant séchées au préalable, si nécessaire, jusqu'à une teneur en eau de 20 à 50 % en poids.

2. Procédé selon la revendication 1, dans lequel l'argile est une argile de carrière.

3. Procédé selon l'une des revendications 1 à 2, dans lequel la boue organominérale est une boue d'épuration ou une boue industrielle ou un de leurs mélanges.

4. Procédé selon l'une des revendications 1 à 3, dans lequel l'étape a) est réalisée par filage et éventuellement suivie d'une sphéronisation.

5. Procédé selon l'une des revendications 1 à 4, dans lequel le séchage du granulat à l'étape b) est réalisé à une température comprise entre 25 et 120 °C.

6. Procédé selon l'une des revendications 1 à 5, dans lequel l'étape de séchage est conduite dans un séchoir électrique, un séchoir à micro-ondes, un séchoir au gaz.

7. Procédé selon l'une des revendications 1 à 6, dans lequel le granulat est séché jusqu'à une teneur résiduelle d'eau inférieure à 5 et de préférence inférieure à 2 % en poids.

8. Procédé selon l'une des revendications 1 à 6, dans lequel suite à l'opération de cuisson, le granulat est refroidi à température ambiante pour diminuer la température à une vitesse de 100°C par heure à 300°C par heure pour éviter la fragilisation du granulat par la transformation du quartz et la variation dimensionnelle que s'ensuit.

9. Procédé selon l'une des revendications 1 à 8, dans lequel le granulat d'argile expansée est enrobé afin d'affiner la porosité de surface.

10. Procédé selon l'une des revendications 1 à 9, dans lequel le granulat obtenu à l'étape c) est ensuite enrobé avec un polymère.

11. Procédé selon l'une des revendications 1 à 10, dans lequel après la cuisson de l'étape c), on obtient un granulat d'argile expansé ayant une masse volumique apparente comprise entre 500 et 1200 kg/m³.

## Patentansprüche

1. Verfahren zur Herstellung von Blähtongranulaten, die Schritten umfassend:
a) Granulieren eines Tongemisches, das mindestens 10 Gew.-% an trockenen Feststoffen eines organomineralischen Schlamms umfasst, wobei die Mischung 10 bis 50 Gew.-% an trockenen Feststoffen aus organischem Stoff enthält;
b) Trocknen des erhaltenen Granulats; und
c) Brennen des Granulats, um ein Blähtongranulat zu erhalten, wobei das Brennen in zwei aufeinanderfolgenden Schritten realisiert wird, wobei
- der erste Brennschritt, der bei einer Temperatur von 500°C bis 750°C realisiert wird, die organischen Stoffe eliminiert und die Volumenausdehnung des Granulats erzielt,
- der zweite Brennschritt, der bei einer Temperatur von 900°C bis 1200°C realisiert wird, das endgültige Aufblähen des Granulats und die Beschaffung einer definitiven Kohäsion des Granulats durch eine eutektische Einwirkung zwischen den jeweiligen Mineralfraktionen des Tons und des Schlamms erzielt;
wobei die Schlämme, wenn notwendig vorher bis zu einem Wassergehalt von 20 bis 50 Gew.-% getrocknet werden.

2. Verfahren nach Anspruch 1, bei dem der Ton ein abgebauter Ton ist.

3. Verfahren nach einem der Ansprüche 1 bis 2, bei dem der organomineralische Schlamm ein Klärschlamm oder ein Industrieschlamm oder eine Mischung aus diesen Schlämmen ist.

4. Verfahren nach einem der Ansprüche 1 bis 3, bei dem der Schritt a) durch Extrudieren und gegebenenfalls gefolgt durch Sphäronisation hergestellt wird.

5. Verfahren nach einem der Ansprüche 1 bis 4, bei dem die Trocknung des Granulats bei Schritt b) bei einer Temperatur zwischen 25 und 120°C realisiert wird.

6. Verfahren nach einem der Ansprüche 1 bis 5, bei dem der Trocknungsschritt in einem elektrischen Trockner, einem Mikrowellentrockner, einem Gastrockner durchgeführt wird.

7. Verfahren nach einem der Ansprüche 1 bis 6, bei dem das Granulat bis zu einem Restwassergehalt geringer als 5, vorzugsweise geringer als 2 Gew.-% getrocknet wird.

8. Verfahren nach einem der Ansprüche 1 bis 6, bei dem nach dem Brennvorgang das Granulat auf Umgebungstemperatur abgekühlt wird, um die Temperatur bei einer Geschwindigkeit von 100°C pro Stunde auf 300°C pro Stunde zu verringern, um die Versprödung des Granulats durch die Umwandlung des Quarzes und die daraus folgende Größenänderung zu vermeiden.

9. Verfahren nach einem der Ansprüche 1 bis 8, bei dem das Blähtongranulat ummantelt wird, um die Oberflächenporosität zu verfeinern.

10. Verfahren nach einem der Ansprüche 1 bis 9, bei dem das im Schritt c) erhaltene Granulat darauf folgend mit einem Polymer ummantelt wird.

11. Verfahren nach einem der Ansprüche 1 bis 10, bei dem nach dem Brennen des Schritts c) ein Blähtongranulat erhalten wird, das eine Rohdichte zwischen 500 und 1200 kg/m³ aufweist.

## Claims

1. A method for preparing expanded clay aggregates, comprising the steps of:
a) aggregating a clay mixture comprising at least 10% by dry matter weight of organo-mineral sludge, said mixture comprising from 10% to 50% by dry matter weight of organic materials;
b) drying the aggregate that is obtained; and
c) baking the aggregate in order to obtain an expanded clay aggregate, said baking being carried out in two successive steps:
- the first baking step, which is carried out at a temperature ranging from 500°C to 750°C, eliminating the organic materials and obtaining the volume expansion of the aggregate;
- the second baking step, which is carried out at a temperature ranging from 900°C to 1200°C, obtaining the final expansion of the aggregate and the acquisition of a definitive cohesion of the aggregate by a eutectic effect between the respective mineral fractions of the clay and of the sludge;
the sludge being dried beforehand, if necessary, until it has a moisture content ranging from 20% to 50% by weight.

2. The method according to claim 1, wherein the clay is a quarry clay.

3. The method according to any one of claims 1 to 2, wherein the organo-mineral sludge is a sewage sludge or an industrial sludge or one of their mixtures.

4. The method according to any one of claims 1 to 3, wherein step a) is carried out by extrusion and is possibly followed by spheronisation.

5. The method according to any one of claims 1 to 4, wherein the aggregate drying of step b) is carried out at a temperature between 25°C and 120°C.

6. The method according to any one of claims 1 to 5, wherein the drying step is conducted in an electric dryer, a microwave dryer, a gas dryer.

7. The method according to any one of claims 1 to 6, wherein the aggregate is dried until it has a residual moisture content below 5% and preferably below 2% by weight.

8. The method according to any one of claims 1 to 6, wherein, following the baking operation, the aggregate is cooled at room temperature in order to reduce the temperature at a speed ranging from 100°C per hour to 300°C per hour in order to prevent the embrittlement of the aggregate by the transformation of the quartz and the ensuing dimensional variation.

9. The method according to any one of claims 1 to 8, wherein the expanded clay aggregate is coated in order to refine the surface porosity.

10. The method according to any one of claims 1 to 9, wherein the aggregate obtained in step c) is subsequently coated with a polymer.

11. The method according to any one of claims 1 to 10, wherein, after the baking of step c), an expanded clay aggregate is obtained with an apparent mass density between 500 and 1200 kg/m³.
